# EUROPÄISCHE PATENTSCHRIFT

(11) **EP 0 792 574 B1**
(45) Veröffentlichungstag und Bekanntmachung des Hinweises auf die Patenterteilung: **10.07.2002**
(21) Anmeldenummer: 97102849.3
(22) Anmeldetag: 21.02.1997
(51) Int. Cl.: A01B 73/00, A01D 34/66, A01D 67/00

(54) **Gezogenes Gerät**
Towed implement
Outil remorque

(30) Priorität: 28.02.1996 US 608384
(43) Veröffentlichungstag der Anmeldung: 03.09.1997
(73) Patentinhaber: DEERE & COMPANY, Moline, Illinois 61265-8098 (US)
(72) Erfinder: Stephenson, Roger Dale, Ottumwa, Iowa 52501 (US); Jordan, Mark Alan, Fowler, Indiana, 47944 (US); Parsons, Stephen Kenneth, Ottumwa, Iowa 52501 (US)
(74) Vertreter: Magin, Ludwig Bernhard

(56) Entgegenhaltungen:
- EP-A- 0 269 166
- BE-A- 545 626
- FR-A- 2 397 139
- GB-A- 2 024 598
- GB-A- 2 056 248
- US-A- 3 919 831
- US-A- 4 558 560
- US-A- 4 682 462

## Beschreibung

Die Erfindung betrifft ein gezogenes Gerät mit einem Hauptrahmen, einer Deichsel, einem Hydraulikmotor und einer Hubbegrenzungsvorrichtung, wobei die Deichsel mittels des Hydraulikmotors innerhalb eines Arbeitsbereichs und in eine Transportstellung bewegbar ist, wobei zur Bewegung innerhalb des Arbeitsbereichs ein Kurzhub einer in dem Hydraulikmotor enthaltenen Kolbenstange ausreicht, während zur Verstellung in die Transportstellung die Kolbenstange einen Langhub ausführt (siehe US-A-4682462).

Die US-A-4,558,560 offenbart ein gezogenes Mähgerät mit einem Mähwerk, das sich mit einem Hauptrahmen quer zur normalen Fahrtoder Arbeitsrichtung erstreckt und mittels einer Deichsel hinter einem Ackerschlepper hergezogen werden kann. Die Deichsel erstreckt sich während des Mähbetriebs quer zu dem Mähwerk und dem Hauptrahmen. Innerhalb eines bestimmten Arbeitsbereichs kann die Deichsel von einer streng mittigen Lage ausgelenkt werden, wobei eine Vorrichtung zwischen dem Hauptrahmen und der Deichsel vorgesehen ist, die die seitlichen Endstellungen der Deichsel bestimmt, wobei dann ein Hydraulikzylinder zum Verschwenken der Deichsel nicht ganz eingefahren werden kann. Diese Vorrichtung kann in eine Transportstellung geschwenkt werden, in der der Hydraulikzylinder ganz eingefahren und die Deichsel weiter geschwenkt werden kann, so daß sie sich im wesentlichen längs des Hauptrahmens erstreckt. Diese Vorrichtung ist relativ aufwendig gebaut.

Das der Erfindung zugrunde liegende Problem wird darin gesehen, ein gezogenes Gerät bereitzustellen, dessen Deichsel mit einfachen Mitteln sowohl innerhalb eines Arbeitsbereichs verschwenkt als auch in eine Transportstellung gebracht werden kann.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird nicht ein Anschlag für die Deichsel geschaffen, der insbesondere angesichts der Hebelverhältnisse bei der bekannten Vorrichtung massiv ausgebildet sein müßte, sondern es wird Einfluß auf den Hub des Hydraulikmotors selbst genommen. Da in diesem Fall nur eine lineare Bewegung im Gegensatz zu einer Schwenkbewegung mit Hebelmomenten begrenzt wird, fallen geringere zu beherrschende Kräfte an und es ist eine leichtere Ausführung möglich.

Wenn die Hubbegrenzungsvorrichtung auf dem Zylinder selbst oder an dem Hauptrahmen bzw. der Kolbenstange gelagert ist, ist deren Zuordnung zur Kolbenstange stets sichergestellt, und die Anlage an den Zylinder ist problemlos möglich.

Ein zweiarmiger Hebel kann auf einfache Weise geschwenkt werden, da die die Schwenkbewegung einleitende Kraft an einem außermittigen Hebel angreifen kann. Die kehlartige Ausbildung eines seiner Abschnitte ermöglicht es, die Kolbenstange in sich aufzunehmen, so daß ein biegesteifer Teil zum Anhalten des Zylinders entsteht.

Die Bedienung der Hubbegrenzungsvorrichtung insbesondere von einer Zugmaschine aus gestaltet sich sehr einfach, wenn deren Verstellung, d. h. insbesondere die Verstellung von deren Hebel, mittels eines Betätigungsglieds vorgenommen wird. Das Betätigungsglied kann sowohl ein Motor - elektrisch, hydraulisch, pneumatisch - als auch ein Gestänge oder Seilzug sein.

Zur Reduktion der Last auf dem Hydraulikmotor während der Transportfahrt und zur Erhöhung der Sicherheit dient es, wenn die Deichsel mit der Hubbegrenzungsvorrichtung verriegelt werden kann, was am einfachsten mit einer Hakenverbindung erfolgt, die sich aus einer Ausnehmung an dem Hebel und einem Dorn an der Deichsel oder umgekehrt ergibt.

Nur geringe Kosten fallen für die Hubbegrenzungsvorrichtung an, wenn anstatt eines doppeltwirkenden Betätigungsglieds eine Feder, insbesondere eine Spiralfeder, verwendet wird, die den Hebel in seine den Hub der Kolbenstange begrenzende und gegebenenfalls auch die Deichsel verriegelnde Stellung bringt.

Die kehlartige Ausbildung auch des zweiten Abschnitts des Hebels erhöht dessen Stabilität und deckt gegebenenfalls den Dorn zum Verriegeln der Deichsel ab, so daß dieser nicht übersteht und zu einem Hindernis wird.

In konstruktiv einfacher Weise läßt sich der Hebel festlegen, indem der Hebel auf dem die Kolbenstange an dem Hauptrahmen haltenden Bolzen oder auf Schwenkbolzen einer auf den Zylinder aufgesetzten Klemme schwenkbar gelagert ist.

Eine von äußeren Einflüssen unbeeinträchtigte Zuordnung des Hebels zu dem Betätigungsglied wird erreicht, wenn dieses und der Hebel auf demselben Teil gelagert sind.

In der Zeichnung sind zwei nachfolgend näher beschriebene Ausführungsbeispiele der Erfindung dargestellt. Es zeigt:
- Fig. 1: eine Zugmaschine mit einem gezogenen Gerät in einer in Fahrtrichtung nach links ausgerückten Stellung in schematischer Darstellung und in Draufsicht,
- Fig. 2: die Zugmaschine mit dem gezogenen Gerät in einer in Fahrtrichtung nach rechts ausgerückten Stellung in schematischer Darstellung und in Draufsicht,
- Fig. 3: die Zugmaschine mit dem gezogenen Gerät in einer in Fahrtrichtung verlaufenden Stellung des Geräts in schematischer Darstellung und in Draufsicht,
- Fig. 4: einen Hauptrahmen, eine Deichsel und eine Hubbegrenzungsvorrichtung des Geräts in einer der Darstellung des Gespanns in Figur 1 entsprechenden Stellung,
- Fig. 5: den Hauptrahmen, die Deichsel und die erste Hubbegrenzungsvorrichtung des Geräts in einer der Darstellung des Gespanns in Figur 2 entsprechenden Stellung,
- Fig. 6: den Hauptrahmen, die Deichsel und die erste Hubbegrenzungsvorrichtung des Geräts in einer der Darstellung des Gespanns in Figur 3 entsprechenden Stellung,
- Fig. 7: den Hauptrahmen, die Deichsel und eine alternative Hubbegrenzungsvorrichtung des Geräts in einer der Darstellung des Gespanns in Figur 1 entsprechenden Stellung, und
- Fig. 8: den Hauptrahmen, die Deichsel und die alternative Hubbegrenzungsvorrichtung des Geräts in einer der Darstellung des Gespanns in Figur 3 entsprechenden Stellung.

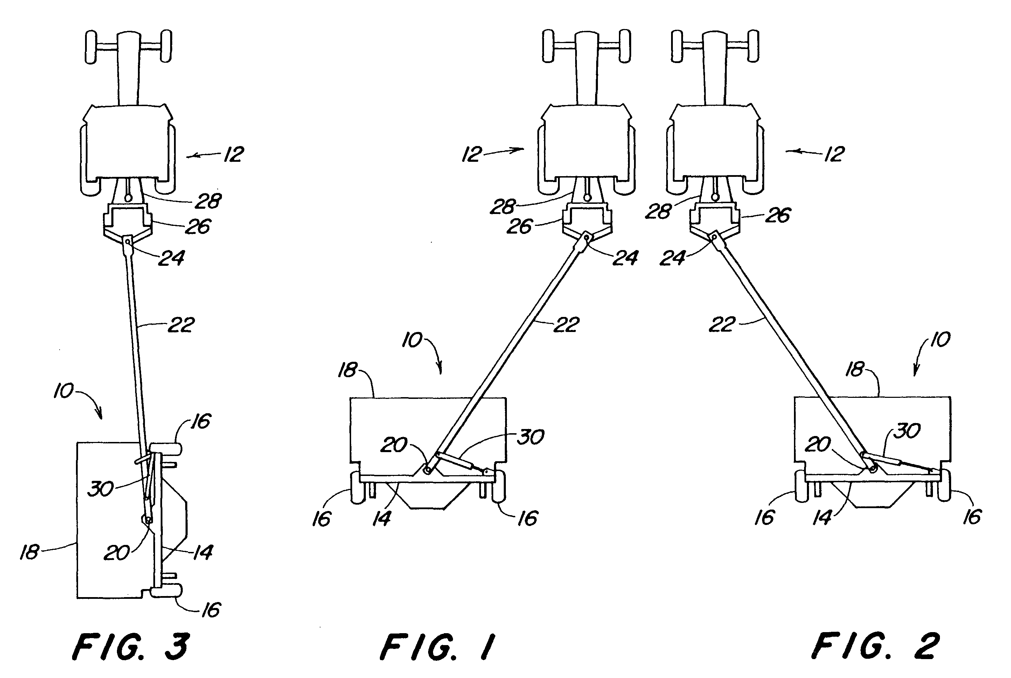

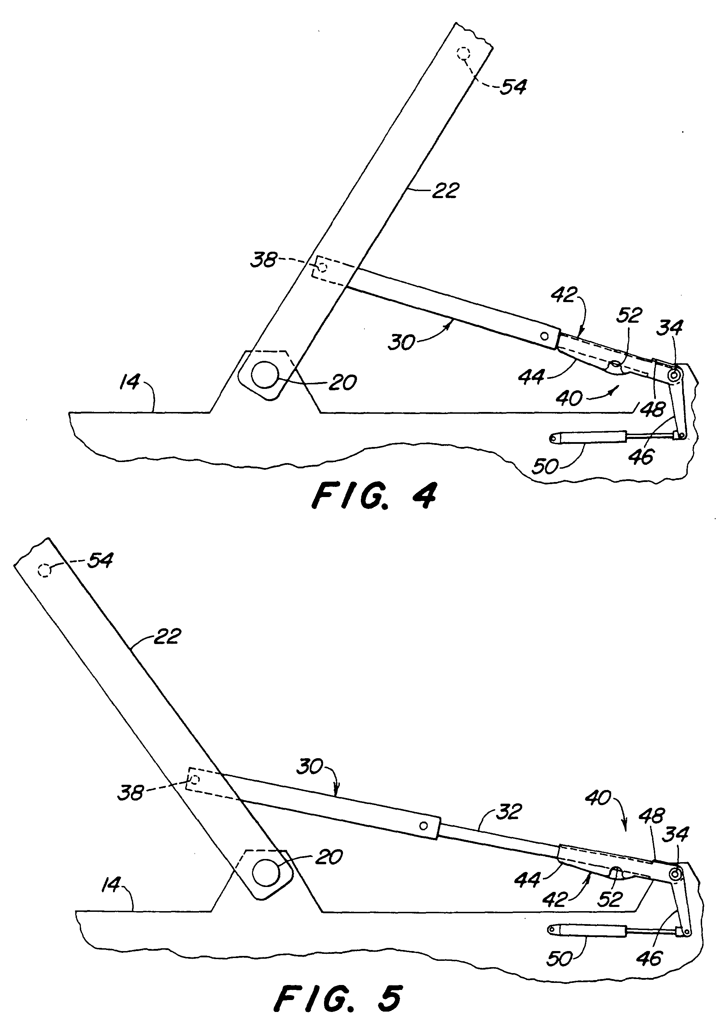

In den Figuren 1 bis 3 ist in schematischer Darstellung ein gezogenes landwirtschaftliches Gerät 10 und eine Zugmaschine 12 in der Art eines Ackerschleppers gezeigt. Das Gerät 10 könnte z. B. ein Mähschlagzetter sein und enthält einen Hauptrahmen 14, der auf einem Paar von Laufrädern 16 abgestützt ist. Eine Erntebergungsvorrichtung 18 hängt von dem Hauptrahmen 14 in bekannter Weise herab, um eine Schwimmbewegung während des Erntebetriebs zu ermöglichen. Eine Deichsel 22 erstreckt sich über die Erntebergungsvorrichtung 18 und ist mit ihrem rückwärtigen Endbereich schwenkbar an die Anschlußstelle 20 angeschlossen, die sich mitten zwischen gegenüberliegenden Enden des Hauptrahmens 14 befindet. Ein vorderer Endbereich der Deichsel 22 ist mittels eines Bolzens 24 schwenkbar an einen Zugvorrichtungsadapter 26 angeschlossen, dessen gegenüberliegende Arme an untere Lenker einer von der Zugmaschine 12 getragenen Dreipunktkupplung 28 angebracht sind. Damit das Gerät 10 - wie in Figur 1 gezeigt - links der Zugmaschine 12 oder gemäß Figur 2 rechts der Zugmaschine 12 gezogen werden kann, ist ein ausfahrbarer und einziehbarer Hydraulikmotor 30 zum Schwenken der Deichsel 22 vorgesehen. Mit Bezug auf die Figuren 4 und 5 ist zu erkennen, daß der Hydraulikmotor 30 eine Kolbenstange 32, die mittels eines Bolzens 34 schwenkbar an das rechte Ende des Hauptrahmens 14 angeschlossen ist, und einen Zylinder 36 enthält, der mittels eines Bolzens 38 schwenkbar an die Deichsel 22 angeschlossen ist.

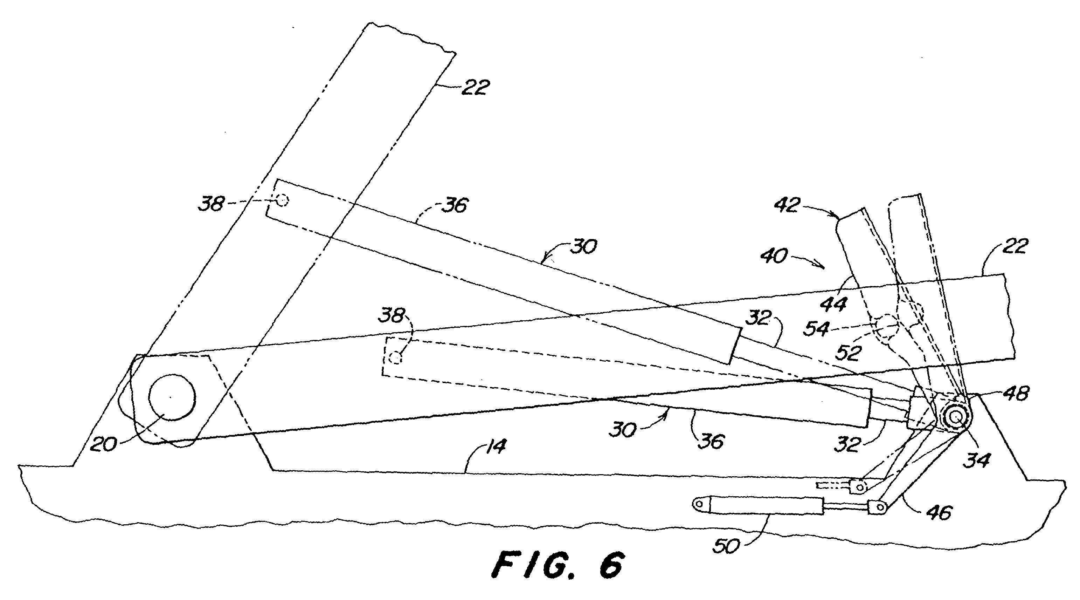

Wie es am besten aus den Figuren 4 bis 6 zu ersehen ist, ist dem Hydraulikmotor 30 eine Hubbegrenzungsvorrichtung 40 nach einem ersten Ausführungsbeispiel der Erfindung zugeordnet. Im einzelnen enthält die Hubbegrenzungsvorrichtung 40 einen zweiarmigen, d. h. als Winkelhebel ausgebildeten, Hebel 42, der um den Bolzen 34 schwenkbar montiert ist und einen ersten kehlartigen Abschnitt 44 oder Arm und einen zweiten Abschnitt 46 oder Arm enthält, der mit dem Bolzen 34 verbunden ist. Der Hebel 42 ist somit für eine Schwenkbewegung zwischen einer Zylinderwegbegrenzungsstellung, wie sie in den Figuren 4 und 5 gezeigt ist, und einer Schwenkwegfreigabestellung, wie sie in Figur 6 gezeigt ist, schwenkbar. In der Zylinderwegbegrenzungsstellung übergreift der erste Abschnitt 44 die Kolbenstange 32 und erstreckt sich entlang von dieser, um somit das tatsächliche Maß des Einfahrens der Kolbenstange 32 in den Zylinder 36 zu begrenzen. In der Schwenkwegfreigabestellung ist der Abschnitt 44 von der Kolbenstange 32 abgewinkelt, um somit das ungehinderte Einfahren der Kolbenstange 32 des Hydraulikmotors 30 zu ermöglichen. Eine Feder 48 ist vorgesehen, um den Hebel 42 aktiv in seine Zylinderwegbegrenzungsstellung zu bringen, wobei die Windungen der Feder 48 auf dem Bolzen 38 aufgenommen sind und die entgegengesetzten Enden an dem Hauptrahmen 14 und dem Hebel 42 der Hubbegrenzungsvorrichtung 40 angreifen. Anstelle der als Spiralfeder ausgebildeten Feder 48 könnte auch eine Zugfeder oder ein anderes herkömmliches Spannelement benutzt werden. Der Hebel 42 kann mittels eines einfachwirkenden hydraulischen Betätigungsglieds 50, das zwischen den Hauptrahmen 14 und den zweiten Abschnitt 46 des Hebels 42 eingefügt ist, von seiner Zylinderwegbegrenzungsstellung in seine Schwenkwegfreigabestellung geschwenkt werden. Steuervorrichtungen für das Betätigungsglied 50 können an jeder beliebigen Stelle, die Zugriff für eine auf dem Boden stehende oder auf der Zugmaschine 12 sitzende Bedienungsperson bietet, vorgesehen sein. Es wird darauf hingewiesen, daß der Hebel 42 der Hubbegrenzungsvorrichtung 40 in seine Schwenkwegfreigabestellung entweder manuell oder mittels eines hebelbetätigten Gestänges anstelle des Betätigungsglieds 50 bewegt werden könnte.

Wenn sich der Hebel 42 der Hubbegrenzungsvorrichtung 40 in seiner Schwenkwegfreigabestellung befindet, dient er als ein Anschlag zum Halten der Deichsel 22 in ihrer Transportstellung. Im einzelnen ist ein oberer Schenkel des kehlartigen ersten Abschnitts 44 des Hebels 42 mit einer Ausnehmung 52 versehen, und die Deichsel 22 weist einen sich nach unten erstreckenden Dorn 54 auf, der so angeordnet ist, daß er in die Ausnehmung 52 eintritt, sobald die Deichsel 22 in ihre Transportstellung geschwenkt ist. Dabei wird die Steuerungsvorrichtung für die Hubbegrenzungsvorrichtung 40 derart betätigt, daß die Feder 48 den Hebel 42 geringfügig entgegen dem Uhrzeigerdrehsinn aus seiner extremen Schwenkwegfreigabestellung, wie sie in durchgezogenen Linien in Figur 6 dargestellt ist, schwenken läßt.

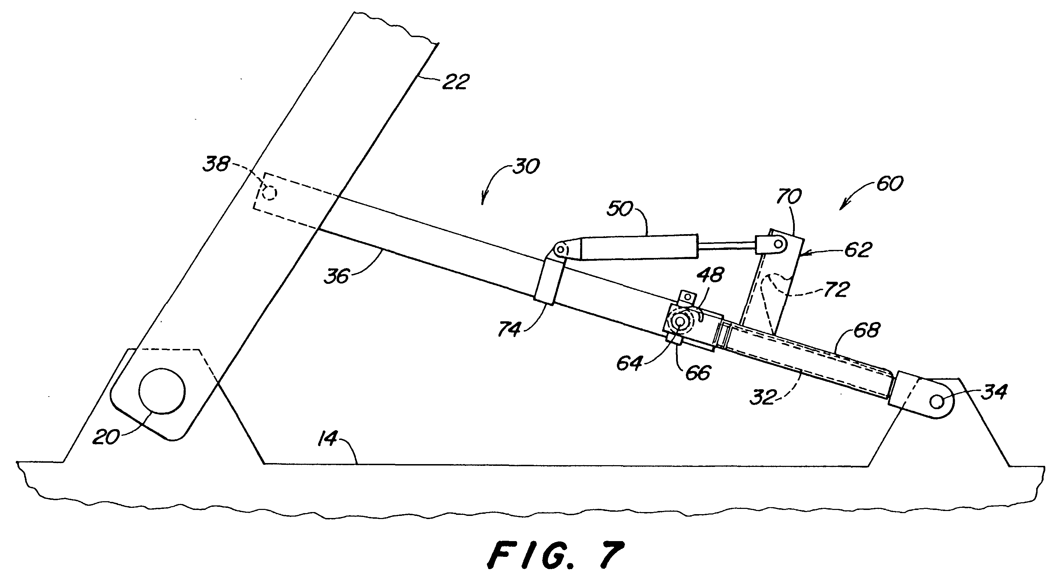

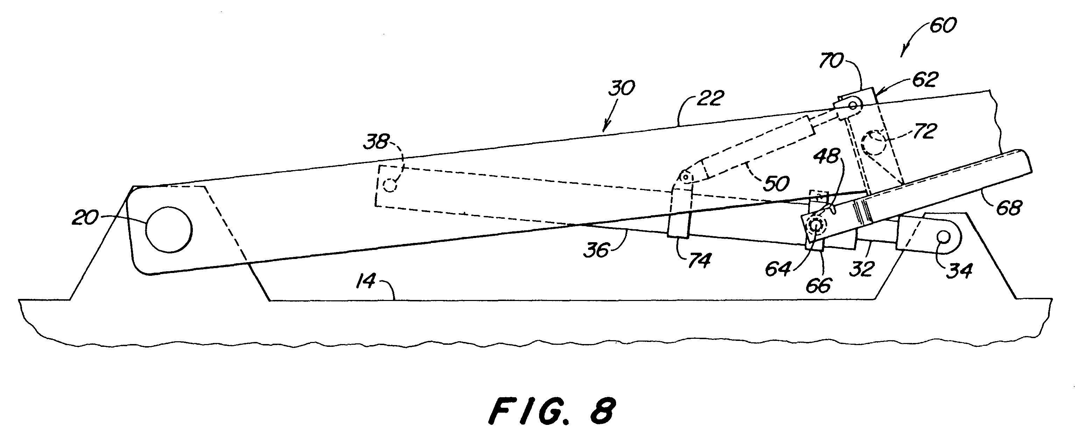

Es wird nun Bezug genommen auf das in den Figuren 7 und 8 Gezeigte. Dort ist eine Hubbegrenzungsvorrichtung 60 gezeigt, die nach demselben Prinzip wie die Hubbegrenzungsvorrichtung 40 funktioniert, aber sich dadurch unterscheidet, daß sie einen Hebel 62 enthält, der schwenkbar an den Zylinder 36 des Hydraulikmotors 30 zum Schwenken um Schwenkbolzen 64 angeschlossen ist, die einander gegenüberliegend auf einer auf dem Zylinder 36 befestigten Klemme 66 vorgesehen oder ausgebildet sind. Der Hebel 62 wird von einem ersten und einem zweiten jeweils kehlartigen Arm oder Abschnitt 68 und 70 gebildet. Ein Endbereich des ersten Abschnitts 68 ist an den Schwenkbolzen 64 schwenkbar angebracht, während sich der zweite Abschnitt 70 unter einem rechten Winkel von dem ersten Abschnitt 68 an einer Stelle, die einen Abstand zu den Schwenkbolzen 64 einhält, weg erstreckt und an dem ersten Abschnitt 68 angebracht ist. Der Hebel 62 ist zwischen einer Schwenkwegbegrenzungsstellung - sh. Figur 7 - und einer Schwenkwegfreigabestellung - sh. Figur 8 - schwenkbar. In der Schwenkwegbegrenzungsstellung nimmt der erste Abschnitt 68 die Kolbenstange 32 in sich auf und erstreckt sich entlang von ihr, so daß er tatsächlich eine Verlängerung des Zylinders 36 hervorruft, die an die Befestigungsgabel der Kolbenstange 32 anschlägt, um so zu verhindern, daß der Hydraulikmotor 30 über ein Maß eingefahren wird, das erforderlich ist, um die Deichsel 22 in ihre extreme rechte Arbeitsstellung zu bringen. In der Schwenkwegfreigabestellung ist der erste Abschnitt 68 von der Kolbenstange 32 abgewinkelt und läßt es mithin zu, daß der Hydraulikmotor 30 ganz einfährt und die Deichsel 22 in ihre Transportstellung bewegt. Der zweite Abschnitt 70 ist mit einer Ausnehmung 72 oder Nut in seinem oberen Schenkel versehen, die den Dorn 54 in sich aufnimmt, um die Deichsel 22 in ihrer Transportstellung zu verriegeln. In dieser Ausführungsform ist die Feder 48 auf einen der Schwenkbolzen 64 montiert und dient dazu, den Hebel 62 mit Blick auf die Figuren 7 und 8 im Uhrzeigerdrehsinn vorzuspannen. Das Betätigungsglied 50 ist zwischen einen äußeren Endbereich des zweiten Abschnitts 70 und einen Halter 74 eingebaut, der von dem Zylinder 32 des Hydraulikmotors 30 getragen wird.

Es wird daraus erkenntlich, daß die Hubbegrenzungsvorrichtung 40 und Hubbegrenzungsvorrichtung 60 ein einfaches, kostengünstiges Mittel darstellen, die es ermöglichen, daß die Deichsel 22 wahlweise in einer Transportstellung gebracht und dort arretiert werden kann.

## Patentansprüche

1. Gezogenes Gerät (10) mit einem Hauptrahmen (14), einer Deichsel (22), einem Hydraulikmotor (30) und einer Hubbegrenzungsvorrichtung (40), wobei die Deichsel (22) mittels des Hydraulikmotors (30) innerhalb eines Arbeitsbereichs und in eine Transportstellung bewegbar ist, wobei zur Bewegung innerhalb des Arbeitsbereichs ein Kurzhub einer in dem Hydraulikmotor (30) enthaltenen Kolbenstange (32) ausreicht, während zur Verstellung in die Transportstellung die Kolbenstange (30) einen Langhub ausführt, **dadurch gekennzeichnet, daß** die Hubbegrenzungsvorrichtung (40) einen Abschnitt (44, 68) aufweist, der der Differenz zwischen dem Kurz- und dem Langhub entspricht und der in eine Stellung bringbar ist, in der ein die Kolbenstange (32) aufnehmender Zylinder (36) an der Übergangsstelle von dem Arbeitsbereich in den Transportbereich an ihn anlegbar ist.

2. Gezogenes Gerät nach Anspruch 1, **dadurch gekennzeichnet, daß** die Hubbegrenzungsvorrichtung (40) mittelbar oder unmittelbar auf dem Zylinder (36) oder dem Hauptrahmen (14) oder der Kolbenstange (32) schwenkbar gelagert ist.

3. Gezogenes Gerät nach Anspruch 1 oder 2, **dadurch gekennzeichnet, daß** die Hubbegrenzungsvorrichtung 40 einen zweiarmigen Hebel (42, 62) enthält, dessen einer Arm von dem Abschnitt (44, 68) gebildet wird, der derart kehlartig ausgebildet ist, daß er die Kolbenstange (32) übergreifen kann, solange sich die Deichsel (22) innerhalb ihres Arbeitsbereichs befindet und der Abschnitt (44, 68) in Anlage an die Kolbenstange (32) gebracht ist.

4. Gezogenes Gerät nach Anspruch 3, **dadurch gekennzeichnet, daß** der zweite Arm des Hebels (42, 62) einen Abschnitt (46, 68) bildet, an dem ein Betätigungsglied (50) zur Verstellung der Hubbegrenzungsvorrichtung (40) angreift.

5. Gezogenes Gerät nach einem oder mehreren der vorherigen Ansprüche, **dadurch gekennzeichnet, daß** die Hubbegrenzungsvorrichtung (40) eine Ausnehmung (52, 72) aufweist, in die zur Verrieglung der Deichsel (22) in der Transportstellung ein mit dieser verbundener Dorn (54) aufnehmbar ist.

6. Gezogenes Gerät nach einem oder mehreren der vorherigen Ansprüche, **dadurch gekennzeichnet, daß** der Hebel (42, 62) mittels einer Feder (48) in seine nur einen Kurzhub ermöglichende Stellung gedrängt wird.

7. Gezogenes Gerät nach einem oder mehreren der vorherigen Ansprüche, **dadurch gekennzeichnet, daß** der zweite Abschnitt (70) des Hebels (62) ebenfalls kehlartig ausgebildet ist.

8. Gezogenes Gerät nach einem oder mehreren der vorherigen Ansprüche, **dadurch gekennzeichnet, daß** der Hebel (42) auf dem die Kolbenstange (32) an dem Hauptrahmen (14) haltenden Bolzen (34) oder daß der Hebel (62) auf Schwenkbolzen (64) einer auf den Zylinder (36) aufgesetzten Klemme (66) schwenkbar gelagert ist.

9. Gezogenes Gerät nach einem oder mehreren der vorherigen Ansprüche, **dadurch gekennzeichnet, daß** das Betätigungsglied (50) einerseits jeweils an dem zweiten Abschnitt (46, 70) und andererseits an dem Hauptrahmen (14) oder dem Zylinder (36) schwenkbar angreift.

## Claims

1. A towed implement (10) with a main frame (14), a drawbar (22), a hydraulic motor (30) and a stroke limiting device (40), wherein the drawbar (22) can be moved by means of the hydraulic motor (30) within a working range and into a transport position, wherein a short stroke of a piston rod (32) included in the hydraulic motor (30) suffices for the movement within the working range, while the piston rod (30) performs a long stroke for the movement into the transport position, **characterized in that** the stroke limiting device (40) has a section (44, 68) which corresponds to the difference between the long and short strokes and which can be brought into a position in which a cylinder (36) receiving the piston rod (32) can be applied thereto at the point of transition from the working range into the transport range.

2. A towed implement according to claim 1, **characterized in that** the stroke limiting device (40) is pivotally mounted indirectly or directly on the cylinder (36) or the main frame (14) or the piston rod (32).

3. A towed implement according to claim 1 or 2, **characterized in that** the stroke limiting device (40) includes a two-armed lever (42, 62), whose one arm is formed by the section (44, 68), which is so formed like a channel that it can engage over the piston rod (32), so long as the drawbar (22) is within its working range and the section (44, 68) is applied to the piston rod (32).

4. A towed implement according to claim 3, **characterized in that** the second arm of the lever (42, 62) forms a section (46, 68) on which an actuating member (50) engages, for positioning the stroke limiting device (40).

5. A towed implement according to one or more of the preceding claims, **characterized in that** the stroke limiting device (40) has a recess (52, 72) in which a pin (54) attached to the drawbar (22) can be received to lock the drawbar in the transport position.

6. A towed implement according to one or more of the preceding claims, **characterized in that** the lever (42, 62) is biased by means of a spring (48) into its position allowing only a short stroke.

7. A towed implement according to one or more of the preceding claims, **characterized in that** the second section (70) of the lever (62) is also formed like a channel.

8. A towed implement according to one or more of the preceding claims, **characterized in that** the lever (42) is mounted on the pin (34) retaining the piston rod (32) on the main frame (14) or **in that** the lever (62) is pivotally mounted on pivot pins (64) of a clamp (66) fitted on the cylinder (36).

9. A towed implement according to one or more of the preceding claims, **characterized in that** the actuating member (50) pivotally engages the second section (46, 70) at one end and the main frame (14) or the cylinder (36) at the other end.

## Revendications

1. Outil remorque (10) avec un châssis principal (14), un timon (22), un moteur hydraulique (30) et un dispositif de limitation de course (40), dans lequel le timon (22) peut être déplacé au moyen du moteur hydraulique (30) à l'intérieur d'une zone de travail et dans une position de transport, une course réduite d'une tige de piston (32) contenue dans le moteur hydraulique (30) étant suffisante aux fins du déplacement à l'intérieur de la zone de travail, tandis que la tige de piston (32) effectue une course longue aux fins de l'installation dans la position de transport, **caractérisé en ce que** le dispositif de limitation de course (40) comprend une section (44, 68) qui correspond à la différence entre la course réduite et la course longue et qui peut être amenée dans une position dans laquelle un cylindre (36) abritant la tige de piston (32) peut prendre appui contre celui-ci au point de transition de la zone de travail vers la zone de transport.

2. Outil remorque selon la revendication 1, **caractérisé en ce que** le dispositif de limitation de course (40) est monté de façon pivotante, directement ou indirectement, sur le cylindre (36) ou le châssis principal (14) ou la tige de piston (32).

3. Outil remorque selon l'une des revendications 1 ou 2, **caractérisé en ce que** le dispositif de limitation de course (40) comprend un levier à deux bras (42, 62) dont un bras est formé par la section (44, 68) qui est réalisée en forme de rainure de telle sorte qu'elle peut s'étendre jusqu'à la tige de piston (32) à condition que le timon (22) se situe à l'intérieur de sa zone de travail et que la section (44, 68) soit mise en appui sur la tige de piston (32).

4. Outil remorque selon la revendication 3, **caractérisé en ce que** le deuxième bras du levier (42, 62) forme une section (46, 68) qui est saisie par un élément d'actionnement (50) pour le déplacement du dispositif de limitation de course (40).

5. Outil remorque selon l'une ou plusieurs des revendications précédentes, **caractérisé en ce que** le dispositif de limitation de course (40) comprend un évidement (52, 72) dans lequel peut être logé une broche (54) reliée au timon aux fins du verrouillage du timon (22) dans la position de transport.

6. Outil remorque selon l'une ou plusieurs des revendications précédentes, **caractérisé en ce que** le levier (42, 62) est poussé au moyen d'un ressort (48) dans sa position qui autorise uniquement une course réduite.

7. Outil remorque selon l'une ou plusieurs des revendications précédentes, **caractérisé en ce que** la deuxième section (70) du levier (62) est également réalisée en forme de rainure.

8. Outil remorque selon l'une ou plusieurs des revendications précédentes, **caractérisé en ce que** le levier (42) est monté de façon pivotante sur le boulon (34) maintenant la tige de piston (32) sur le châssis principal (14) ou **en ce que** le levier (62) est monté de façon pivotante sur des axes de pivotement (64) d'une borne (66) montée sur le cylindre (36).

9. Outil remorque selon l'une ou plusieurs des revendications précédentes, **caractérisé en ce que** l'élément d'actionnement (50) saisit de façon pivotante, d'un côté, la deuxième section (46, 70), et de l'autre côté, le châssis principal (14) ou le cylindre (36).
